# EUROPEAN PATENT APPLICATION

(11) **EP 4 306 213 A1**
(43) Date of publication of application: **17.01.2024**
(21) Application number: 22184899.7
(22) Date of filing: 14.07.2022
(51) Int. Cl.: B01L 3/00, G01N 33/531, G05B 19/418

(54) **METHOD FOR PRODUCING A ROLL OF MEMBRANE UNITS**

(71) Applicant: Sartorius Stedim Biotech GmbH, 37079 Göttingen (DE)
(72) Inventor: Austerjost, Jonas, 37083 Göttingen (DE); Kesting, Alfons, 37083 Göttingen (DE); Stumm, Simon, 37081 Göttingen (DE); Söldner, Robert, 37083 Göttingen (DE)
(74) Representative: Gottschald Patentanwälte Partnerschaft mbB

(57) **Abstract**

The invention is directed to a method for producing a roll (1) or sheet of membrane units (2) for a membrane product (3) such as a lateral flow test from a roll (6) or sheet of membrane material (7), by means of a primary production arrangement (9), wherein the roll (6) or sheet of membrane material (7) is processed into a roll (1) or sheet of membrane units (2) in a primary processing routine, wherein in the primary processing routine, for generating the membrane units (2), a fluidic structure (11), in particular a hydrophobic structure, for defining fluid flow through the membrane material (7) is introduced into the membrane material (7) by means of a processing tool (12), wherein an evaluation routine is performed by means of an evaluation arrangement (15) comprising a sensor arrangement (16) and an evaluation control (17). It is proposed that in the evaluation routine, evaluation images (18) of the fluidic structures (11) of the membrane units (2) are generated by means of the sensor arrangement (16) and evaluation data (19) are generated by means of the evaluation control (17) and that the evaluation data (19) represent the deviation in predefined geometrical properties of the fluidic structure (11) in the respective evaluation image (18) with respect to the fluidic structure (11) in a reference image (21).

## Description

The present invention is directed to a method for producing a roll or sheet of membrane units for a membrane product such as a lateral flow test according to the general part of claim 1, a method for producing a membrane product from such a roll of membrane units according to claim 14, a method for evaluating a membrane unit for a membrane product such as a lateral flow test according to the general part of claim 20, a primary production arrangement according to claim 21 and a secondary production arrangement according to claim 22.

The membrane unit is part of a membrane product, which is often designed as a lateral flow test. Those lateral flow tests are simple assays used for the detection of target analytes in liquid samples (e. g. saliva, blood or urine). A common example of a lateral flow assay is a home pregnancy test.

The known membrane unit and the known method for its production (EP 3 171 169 A1), which are the starting point for the invention, serve for providing a fluidic structure in the form of a recess structure by means of a processing tool. The fluidic structure comprises channels for the separation of flow lanes.

In order to achieve a high reproducibility in fluid management, the geometry of the fluidic structure has to be realized with high precision. In the known method, this precision is supported by a camera-based detection of reference points on the membrane unit or on the outer border of the membrane unit.

While the known method is most simple to realize, it cannot prevent positioning errors that take place after the detection of the reference points. Any positioning error of the processing tool, which introduces the fluidic structure into the membrane material, cannot be detected.

It is therefore an object of the present invention, to detect any deviation from the predefined geometrical properties of the fluidic structure with low hardware investment.

The above noted problem is solved for a method for producing a roll or sheet of membrane units according to the general part of claim 1 with the features of the characterizing part of claim 1.

First of all, according to the invention, the proposed method according to the first teaching is performed by means of a primary production arrangement. The roll or sheet of membrane material is processed into a roll or sheet of membrane units in a primary processing routine. In the primary processing routine, for generating the membrane units, an above noted fluidic structure for defining fluid flow through the membrane material, in particular a hydrophobic structure, is introduced into the hydrophilic membrane material by means of a processing tool, wherein an evaluation routine is performed by means of an evaluation arrangement with a sensor arrangement and an evaluation control.

The basic idea underlying the invention is now to detect the deviation from predefined geometrical properties of the fluidic structure directly, by generating evaluation images of the fluidic structures directly. According to this, it is the fluidic structure itself that is being measured in view of the above deviation. This detected deviation may be the basis for a feedback loop in order to improve the precision of the future production of membrane units. Alternatively, or in addition, the detected deviation may also be the basis for the adaption of subsequent process steps.

In further detail and most importantly, in the evaluation routine, evaluation images of the fluidic structures of the membrane units are generated by means of the sensor arrangement and evaluation data are generated by means of the evaluation control, which evaluation data represent the deviation in predefined geometrical properties of the fluidic structure in the evaluation image with respect to the fluidic structure in the reference image.

Accordingly, the detection of the deviation is performed based on the generation of evaluation data, which are being generated based on a correlation of the respective evaluation image with the reference image. The reference image preferably represents the content of the evaluation image of a predefined membrane unit with the desired, predefined geometric properties.

As a result, the proposed method does not only provide a precise detection of the deviation from the predefined geometrical properties of the fluidic structure. It may also be performed with a minimum in hardware investment, as it is based on a simple reflection of the evaluation image with respect to the reference image.

The evaluation images generally comprise an array of image data according to claim 2, which may well be generated by an optical sensor, such as a camera sensor according to claim 3. The term "image data" is to be understood in a broad sense such that, according to a variant of claim 2, the image data may be pixel data including information regarding intensity and/or colour. The information regarding intensity may be described by a continuous or binary variable. In another variant, the image data may well be distance data or the like.

According to claim 4, the reference image is preferably generated in a reference routine, for example based on averaging the evaluation images of a number of membrane units. The idea here is to derive the reference image not from CAD-data, but from the already generated evaluation data. It has been proven, that this allows for higher precision, as CAD-data are subject to systematic errors due to the always remaining discrepancy between model and real world.

Claims 5 to 9 are directed to preferred variants regarding the definition of the evaluation data. While claim 5 defines a degree of deviation between the evaluation image and the reference image, claims 6 to 9 are each directed to a deviation in specific geometric features. According to claims 6 and 7, the evaluation data represent a deviation in the form of a shift and/or a rotation of the fluidic structure in the respective evaluation image with respect to the fluidic structure in the reference image. This deviation in shift and/or rotation may easily be the basis for an adaption of previous or subsequent process steps.

According to claim 10, the detected deviation is even marked in the respective evaluation image and/or in the reference image, which simplifies the diagnosis regarding the cause of the deviation.

Claims 11 and 12 are directed to preferred ways to generate the evaluation images. It is especially preferred, that the evaluation image is derived from the raw images by performing a cropping step. This way, the raw images are reduced by image information, which is not used for the generation of the evaluation data.

An above noted feedback loop is proposed by claim 13. With this measure the detected deviation may well be minimized, if the primary production arrangement allows such adaption. However, it may well be possible to leave the deviation as is and just to adapt the subsequent process steps such that the deviation is completely compensated by the adaption of the subsequent steps.

A second teaching according to claim 14, which is of independent importance and which is claimed as such, is directed to a method for producing an above noted membrane product such as a lateral flow test from a roll or sheet of the above noted membrane units.

It is essential for this second teaching, that the belt or sheet of membrane units is processed in at least one secondary processing routine based on the evaluation data. Preferably, the evaluation data are being used to adapt the at least one secondary processing routine, further preferably in order to support the production of identical membrane products (claim 15). In other words, the evaluation data, that have been generated within the method according to the first teaching, are now being applied to the method according to the second teaching.

Claims 16 to 19 are directed to preferred variants regarding the secondary processing routine. Claim 16 is directed to a simple measure to improve the membrane product precision by discarding those membrane units, for which a predefined degree of deviation has been detected.

Alternatively or in addition, claims 17 to 19 show measures to improve the membrane product precision by parameterizing the secondary process routine. It is in particular advantageous that by applying the present method for producing a roll or sheet of membrane units, the precision of the charging of the membrane units with bio-active material (claim 18) can be fundamentally increased, hence saving bio-active material, such as antibodies, and thereby costs as the bio-active material usually is a major cost factor in lateral flow test productions.

The latter measures are more complex in realization, however, they lead to good precision results with a relatively low amount of discarded membrane units.

Another teaching according to claim 20, which is of independent importance as well, is directed to a method for evaluating a membrane unit for a membrane product, which method has been explained with regard to the first teaching already. All explanations given for the first teaching are fully applicable to this third teaching.

According to claims 21 and 22, the primary production arrangement for performing the method according to the first teaching and the secondary production arrangement for performing the method according to the second teaching are claimed as such. All explanations given to the first two teachings are fully applicable.

In the following, an embodiment of the invention is explained with respect to the drawings. In the drawings show
fig. 1 a membrane product with a membrane unit as an example a) in an exploded view b) in a top view according to arrow B and c) in a sectional view according to arrows C-C,
fig. 2 a schematic diagram of the proposed method for producing a roll of membrane units,
fig. 3 the step of extracting an evaluation image from a raw image according to the schematic diagram of the proposed method indicated in fig. 2, and
fig. 4 the step of generating evaluation data according to the schematic diagram of the proposed method indicated in fig. 2.

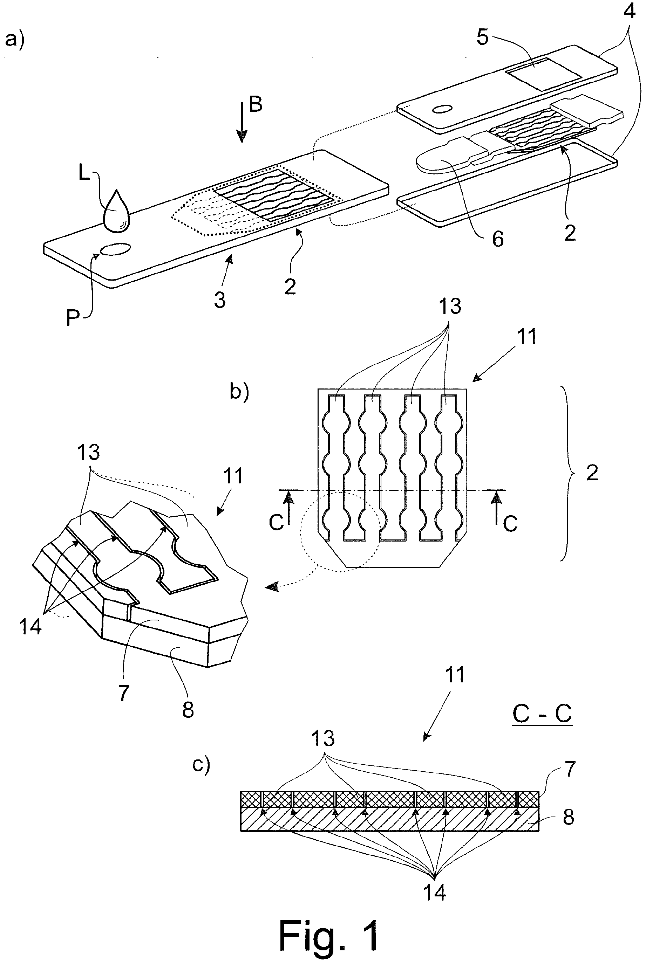

The proposed method serves for producing a roll (not shown) or sheet 1 of membrane units 2 for a membrane product 3 such as a lateral flow test. Such a membrane product 3 is shown in fig. 1a in an exploded view. The membrane product 3 comprises a housing 4 with a window 5 and a sample pad 6 consisting of porous material, to guide the sample liquid L from an entry point P to the membrane unit 2. The membrane unit 2 is being produced from a roll or sheet of membrane material 7, which is applied to a membrane carrier 8. Here and preferably, the membrane material 7 is a hydrophilic, preferably microporous material, such as nitrocellulose. Such membrane materials 7 lead to a consistent lateral wicking of samples and reagents by capillary forces. The membrane carrier 8 is preferably made of a hydrophobic material.

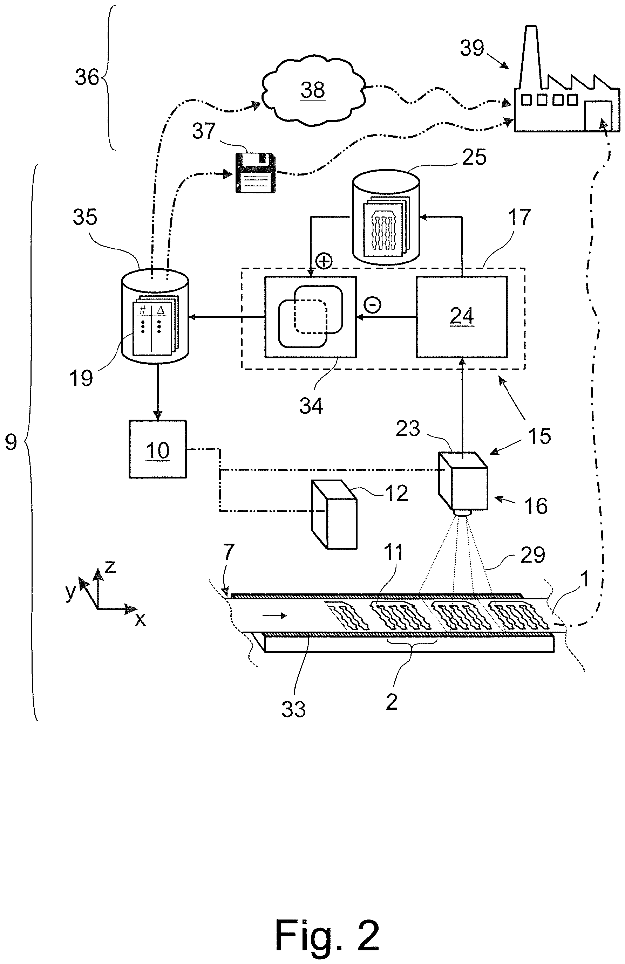

The proposed production of the roll or sheet 1 of membrane units 2 is performed by means of a primary production arrangement 9, which is shown in the lower part of fig. 2.

According to the proposed method, the roll or sheet of membrane material 7 is processed into a roll or sheet 1 of membrane units 2 in a primary processing routine. Here and preferably, processing the rolls is preferred, however, not explicitly shown in the drawings. In distinction to the respective rolls the respective sheets are provided in a basically planar fashion.

Here and preferably, all controllable components of the primary production arrangement 9 are being controlled by an electronic process control 10.

In the primary processing routine, for generating the membrane units 2, a fluidic structure 11 for defining fluid flow through the membrane material 7, in particular a hydrophobic structure, is introduced into the membrane material 7 by means of a processing tool 12. The fluidic structure 11 preferably defines flow lines 13, in which the fluid flow through the membrane material 7 is guided.

Preferably, the fluidic structure 11 is a recess structure, here and preferably in the form of a structure of channels 14. Fig. 1b, c show such a fluidic structure 11 of channels 14. Here and preferably, each flow line 13 is defined by channels 14, which represent the lateral borders of the respective flow line 13.

As an alternative, the channels 14 may be replaced by any other structure within the membrane material 7, which structure is suitable to define the flow lines 13. For example it is preferred, that the membrane material 7 comprises areas with hydrophobic properties as borders of the flow lines 13. Those areas may well be polymer-filled or polymer-enriched areas.

The processing tool 12 may work on different principles such as mechanical, chemical or optical principles. Such mechanical and chemical principles preferably include printing and/or chemical etching. Based on optical working principles, for example, the application of laser etching, laser induced photo polymerization or the like is preferred. For all those principles it is important, that the resulting fluidic structure 11 may be detected by an evaluation arrangement 15 as will be discussed in the following.

The evaluation arrangement 15 is provided with a sensor arrangement 16 and an evaluation control 17. The evaluation arrangement 15 serves for performing the evaluation routine. It is essential for the invention, that in the evaluation routine, evaluation images 18 of the fluidic structures 11 of the membrane units 2 are generated by means of the sensor arrangement 16.

It is further essential for the invention, that evaluation data 19 are generated by means of the evaluation control 17, wherein the evaluation data 19 represent the deviation 20 in predefined geometrical properties of the fluidic structure 11 in the evaluation image 18 with respect to the fluidic structure in a reference image 21.

For a simplified explanation of the invention, the real-life fluidic structure shown in fig. 2 and the fluidic structure within the respective evaluation image 18 are each depicted with the reference number 11.

Generally, the evaluation images 18 each comprise an array of image data that are each assigned a location within the respective image border 22. This array may be a 1, 2 or 3-dimensional array. The image data may be pixel data including intensity information and/or color information, distance data or the like. Accordingly, the sensor arrangement 16 comprises at least one sensor 23, here and preferably exactly one sensor 23, to generate the evaluation images 18. Further preferably, the at least one sensor 23 is an optical sensor, in particular a 2D-camera sensor or a 3D-camera sensor. As an alternative, the optical sensor may well be a laser sensor, which may provide the above noted distance information. This distance information generally refers to a distance in a direction perpendicular to the surface of the membrane unit 2, here and preferably the Z-direction shown in Fig. 2. Based on this distance information it is possible to assess, whether the fluidic structure 11, here and preferably the structure of the channels 14, has a desired depth profile.

There are various ways possible to generate the reference image 21. It is preferred that in a reference routine, from the evaluation images 18 of a number of membrane units 2, a reference image 21 is being defined. In a particularly preferred embodiment, the reference image 21 is being defined based on averaging the image information, preferably and as noted above the pixel data, of the evaluation images 18 of the number of membrane units 2.

Image averaging is a digital image processing technique that is often employed to enhance images that have been corrupted, in particular by random noise or errors. The algorithm used in image averaging operates by computing an average or arithmetic mean of the intensity values for each pixel position or a group of pixels in a set of evaluation images 18 of a number of membrane units 2. Hence, the method serves for feature-preserving error/noise removal, only involving pixels satisfying some validity criterion.

Fig. 2 shows, that the sensor arrangement 16 transmits sensor data to an image unit 24 of the evaluation control 17, which generates a reference image 21 and stores the reference image 21 in a reference image database 25.

It is interesting that the reference image 21 is being generated from the evaluation images 18 that are based on the real membrane units 2 with the real fluidic structures 11. Consequently, relying on CAD-data is not necessary and not even intended here for the generation of the reference image 21. As noted above, CAD-data always deviate from the geometrical properties of the real world, which would induce an undesired systematic error into the evaluation data.

Depending on the application, the evaluation data 19 may be generated in different ways. In a simple approach, the evaluation data 19 represent a deviation between the respective evaluation image 18 and the reference image 21. If those images 18, 21 were identical, the degree of deviation would be 0%. Accordingly, a low degree of deviation corresponds to a high quality grade of the membrane units 2.

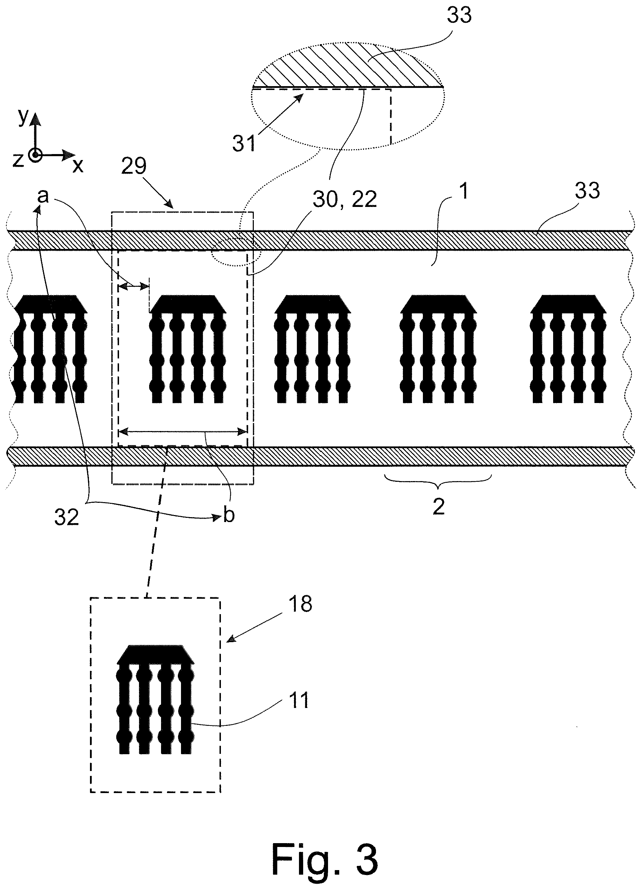

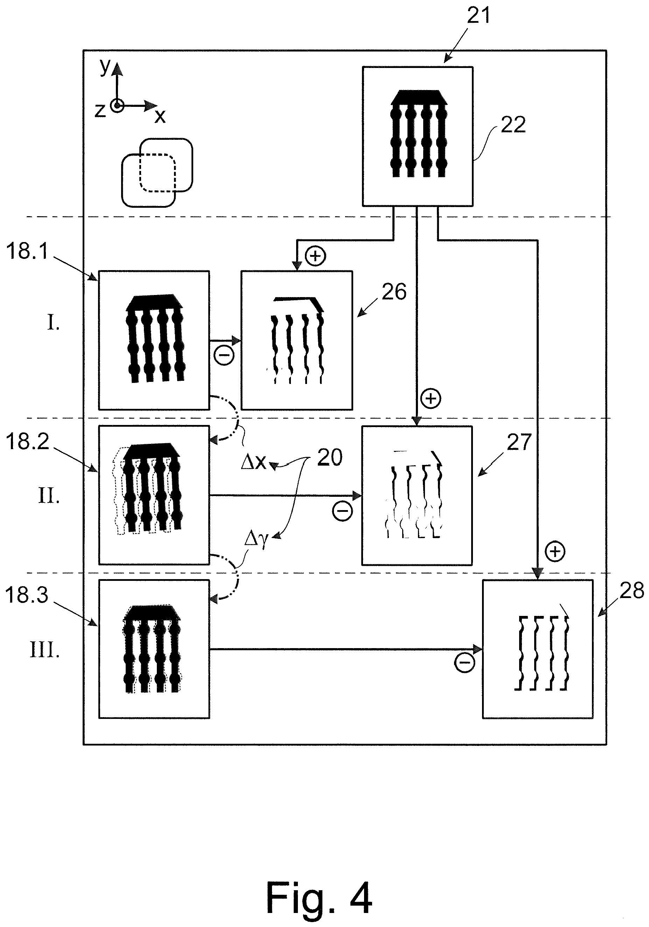

Fig. 4 shows the generation of the evaluation data 19 based on the evaluation image 18 shown in Fig. 3. It is to be noted, that only for easy understanding, in Fig. 3 and Fig. 4 it is presumed, that the fluidic structure 11 is represented by a bold optically detectable structure of the flow lines 13. However, as shown in Fig. 1, the fluidic structure 11 may also be detectable based on the geometric properties of the channels 14 or the like. The proposed method may be applied to any kind of detectable fluidic structure 11.

In row I. of Fig. 4, the respective evaluation image 18.1 is subtracted from the reference image 21 leading to the resulting image 26. The quality grade may be derived from the degree of remaining pixels in the resulting image 26, e.g., the more pixels remain, the poorer the quality of the respective membrane unit 2. Preferably, the quality grade is defined based on applying a mathematical operation to compare the respective evaluation image 18 and the reference image 21. This mathematical operation may well be the principle of calculating the "sum of squared errors". Other mathematical principles are applicable here. As will be noted below, the resulting quality grade may be the basis for further processing the respective membrane unit 2 into a membrane product 3 or to discard the membrane unit 2 from further processing.

A definition of the evaluation data 19, which provides a more accurate representation of the deviation in question, is the evaluation data 19 representing a deviation in the form of a shift and/or a rotation of the fluidic structure 11 in the respective evaluation image 18 with respect to the fluidic structure 11 in the reference image 21. A preferred way to generate those evaluation data 19 is shown by the sequence of rows I., II. and III. in fig. 4. Here and preferably, the evaluation data 19 are generated based on aligning the fluidic structure 11 in the respective evaluation image 18 with the fluidic structure 11 in the reference image 21 and thereby determining the shift and/or rotation of the fluidic structure 11 in the respective evaluation image 18 with respect to the fluidic structure 11 in the reference image 21. Further preferably, determining the deviation in shift and/or rotation of the fluidic structures 11 is performed in an iterative process based on the greedy principle.

According to fig. 4, the evaluation image 18.1 is subtracted from the reference image 21 in row I. as noted above. As the first resulting image 26 comprises a considerable number of pixels, the fluidic structure 11 in the evaluation image 18.1 is shifted by Δx, which leads to the modified evaluation image 18.2. Subtracting the modified evaluation image 18.2 from the reference image 21, results in the second resulting image 27, which comprises considerably less pixels than the first resulting image 26. From the pixel distribution in the second resulting image 27 in row II., the next iterative step of rotating the fluidic structure 11 by the angle Δγ may be derived, which leads to the modified evaluation image 18.3. Subtracting the modified evaluation image 18.3 from the reference image 21, results in the third resulting image 28, hardly containing any pixels. Accordingly, the evaluation data 19 consists of the information regarding the shift by Δx and/or the rotation by angle Δγ of the evaluation image 18 that is necessary to arrive as closely as possible at the reference image 21.

According to another preferred embodiment, the evaluation data 19 represent a deviation in the form of a skewness of the fluidic structure 11 in the respective evaluation image 18 with respect to the fluidic structure 11 in the reference image 21.

As another preferred alternative, the evaluation data 19 represent a deviation in the form of an incompleteness and/or the existence of structural defects of the fluidic structure 11 in the respective evaluation image 18 with respect to the fluidic structure 11 in the reference image 21.

Many other approaches to represent a deviation by the evaluation data 19 are possible. For example, the evaluation data 19 may represent deviations in geometrical properties such as straightness, parallelism, distances, depths profile, or the like.

Looking at the resulting images 26, 27, 28 in rows I., II. and III. of fig. 4, it becomes apparent, that the respective deviation may well be marked in the respective evaluation image 18, which easily allows analyzing, if there is a source of systematic error in the primary production arrangement 9.

Accordingly, it is preferred, that the marked image is being displayed via a user interface (not shown). Alternatively, or in addition, the respective deviation may be marked in the reference image 21. Finally, the respective deviation may be marked as a separate image, which may be either one of the resulting images 26, 27, 28 depicted in fig. 4.

It is generally possible that in the evaluation routine, raw images 29 of the membrane units 2 are generated by means of the sensor arrangement 16, which represent the evaluation images 18. In this case, the raw images 29 of the membrane units 2, not having been substantially data processed, represent the evaluation images 18.

However, here, and preferably, the evaluation images 18 are being extracted from the raw images 29 of the membrane units 2, as indicated in fig. 3. Here and preferably, the respective evaluation image 18 is being extracted from the respective raw image 29 by defining a frame 30 within the raw image 29, which frame 30 defines the image border 22 of the evaluation image 18. As shown in fig. 3 and as is preferred, the image border 22 of the evaluation image 18 is a rectangle, which upper and lower boundaries are defined with respect to a first predefined image structure 31 in the raw image 29 and which left and right boundaries are defined with respect to a second predefined image structure 32 in the raw image 29. In fig. 3 the raw image 29 includes a substrate 33 that is not part of the roll or sheet of membrane material and consequently not part of the membrane units 2. Fig. 3 shows, that the substrate 33 is wider in γ-direction than the roll or sheet 1, such that the substrate 33 may be detected as beams extending above and below the roll or sheet 1 in fig. 3. Here and preferably, the first predefined image structure 31, defines the upper and lower boundaries of the image border 22. Other preferably, the second predefined image structure 32 is represented by the distances "a" and "b" shown in fig. 3. The distance "a" represents the distance of the left boundary of the image border 22 to the outer left side of the fluidic structure 11, while the distance "b" represents the distance between the left and right boundaries of the image border 22. It is to be understood that the above noted definition of the image border 22 of the evaluation image 18 is just an example. What is important is that the extraction of the evaluation image 18 from the raw image 29 is performed systematically for each evaluation image 18, and consequently also for the reference image 21, which, preferably, is based on a number of evaluation images 18 as noted above.

Just as a matter of completeness, it may be pointed out, that the raw image 29 may be derived from the sensor data of the sensor arrangement 16 after standard filtering, converting the color space or the like.

There are various ways possible to use the evaluation data 19. First of all, preferably, the evaluation data 19 are being used by the primary production arrangement 9 to adapt the primary processing routine. This is done, further preferably, by parameterizing the primary production arrangement 9 based on the evaluation data 19, in order to minimize the detected deviation between the respective evaluation image 18 and the reference image 21.

As shown in fig. 2, the operations performed in rows I., II. and III. of fig. 4 are being performed in an evaluation unit 34 of the evaluation control 17, which evaluation unit 34 generates the above noted evaluation data 19 and stores those evaluation data in an evaluation data database 40. In the evaluation data database 40, each membrane unit 2 is assigned the respective evaluation data item.

According to another teaching, which is of independent importance, the method for producing an above noted membrane product 3 from a roll or sheet 1 of membrane units 2 also noted above by means of a secondary production arrangement 36 is claimed as such. According to this teaching, the membrane units 2 have been produced as noted above.

It is essential for this second teaching, that the roll or sheet 1 of membrane units 2 is processed in at least one secondary processing routine based on the above noted evaluation data 19. The secondary production arrangement 36 is only indicated in fig. 2. Fig. 2 also shows that the roll or sheet 1 of membrane units 2 is transferred from the primary production arrangement 9 to the secondary production arrangement 36. In addition, the above noted evaluation data 19, that are each assigned to a particular membrane unit 2, are also transferred from the primary production arrangement 9 to the secondary production arrangement 36 via a data carrier 37, such as a CD, a USB stick or the like, and/or via an internet connection, in particular a cloud server 38.

The secondary processing routine can be performed externally, in particular at a customer's production plant 44, who purchased the membrane units 2 to produce a final membrane product 3 by further processing the membrane units 2, for instance by charging, cutting and/or inserting into a housing 4. This way, the membrane units 2 are converted into the final membrane product 3.

As a result, the secondary production arrangement 36 preferably adapts the secondary process routine to the evaluation data 19, in order to support the production of always identical membrane products 3.

Generally, the primary production arrangement 9 and the secondary production arrangement 36 are separated from each other. However, those two production arrangements 9, 36 may well be at least partly integrated into each other.

The evaluation data 19 may be the basis of the adaption of the secondary process routine in different preferred ways. According to a preferred embodiment, the adaption of the secondary process routine is based on the quality grade, indicating the degree of deviation that is represented by the evaluation data 19. Consequently, the respective membrane unit 2 may be discarded from further processing as noted above.

Alternatively, or in addition, the secondary processing routine includes the secondary process step of cutting the membrane material 7 into single cut-out membrane units 2, each comprising a fluidic structure 11. Preferably, this cutting step is adapted to the deviation represented by the evaluation data 19 such that the membrane units 2 are identical in view of the fluidic structure 11 of the respective membrane unit 2.

Again, alternatively or in addition, the secondary processing routine includes the secondary process step of charging the membrane material 7 at a predefined location on the membrane unit 2 with bio-active material such as antibodies. Preferably, charging of the membrane material 7 is adapted to the detected deviation, such that the placement of the bio-active material with respect to the fluidic structure 11, if desired, is identical for each membrane unit 2.

The term "bio-active material" means any molecule that represents a chemical partner (e.g., an antigen) specifically reacting, in particular binding, with a target molecule to be tested for (e.g., an antibody). Exemplary bio-active materials are proteins, in particular antibodies or antigens, or hormones, in particular amino acid derivatives or human chorionic gonadotropin (hCG). As an example, the latter may be applied for a home pregnancy test.

The term "charging" includes any measure of applying a bio-active material onto a membrane product, e.g., by printing, with the aim to immobilize said bio-active material at a specific location.

The present method for producing a roll or sheet 1 of membrane units 2 can be applied in a biotechnological and/or medical context. Exemplary membrane units 2 used in a biotechnological and/or medical context are lateral flow tests, such as pregnancy tests, drug tests or COVID-19 tests. These tests require a charging of the membrane units 2 with bio-active material. Using the proposed method, the precision of the charging can be fundamentally increased. Thereby, the required amount of bio-active material, which is a major cost factor in lateral flow test productions, can be reduced.

Preferably, the secondary processing routine includes the secondary process step of inserting the cut-out membrane units 2 into cartridge housings, preferably into a housing 4 shown in fig. 1. Further preferably, it is provided, that inserting the cut-out membrane units 2 is adapted to the detected deviation such that the fluidic structure 11 is aligned to a structure, preferably a window 5 or the like, of the housing 4.

According to another teaching, a method for evaluating a membrane unit 2 for a membrane product 3 such as a lateral flow test is claimed as such. Again, separate teachings are directed to the primary production arrangement 9 and the secondary production arrangement 36, each being of independent importance. For those three teachings, reference may be made to all explanations given to the previous teachings.

Preferably, the proposed primary production arrangement 9 comprises a processing tool 12, by which the above noted fluidic structure 11 in the form of a recess structure, preferably in the form of a structure of channels 14, is introduced into the membrane material 7. Further preferably, the primary production arrangement 9 comprises an evaluation arrangement 15 with a sensor arrangement 16 and an evaluation control 17, by which the evaluation data 19 are generated as noted above.

The proposed secondary production arrangement 36 preferably comprises a cutting arrangement (not shown) for performing the secondary process step of cutting the membrane material 7 into single cut-out membrane units 2. Alternatively, or in addition, the secondary production arrangement 36 preferably comprises a charging arrangement (not shown) for performing the secondary process step of charging the membrane material 7 at a predefined location on the membrane unit 2 with bio-active material.

## Claims

1. Method for producing a roll or sheet (1) of membrane units (2) for a membrane product (3) such as a lateral flow test from a roll or sheet of membrane material (7), by means of a primary production arrangement (9),
wherein the roll or sheet of membrane material (7) is processed into a roll or sheet (1) of membrane units (2) in a primary processing routine,
wherein in the primary processing routine, for generating the membrane units (2), a fluidic structure (11) for defining fluid flow through the membrane material (7), in particular a hydrophobic structure, is introduced into the membrane material (7) by means of a processing tool (12), wherein an evaluation routine is performed by means of an evaluation arrangement (15) with a sensor arrangement (16) and an evaluation control (17),
**characterized in**
**that** in the evaluation routine, evaluation images (18) of the fluidic structures (11) of the membrane units (2) are generated by means of the sensor arrangement (16) and evaluation data (19) are generated by means of the evaluation control (17) and that the evaluation data (19) represent the deviation in predefined geometrical properties of the fluidic structure (11) in the respective evaluation image (18) with respect to the fluidic structure (11) in a reference image (21).

2. Method according to claim 1, **characterized in that** the evaluation images (18) each comprise an array of image data, that are each assigned a location within the respective image border (22), preferably, that the image data are pixel data, distance data or the like.

3. Method according to any one of the preceding claims, **characterized in that** the sensor arrangement (16) comprises at least one sensor (23) to generate the evaluation images (18), preferably, that the at least one sensor (23) is an optical sensor, in particular a camera sensor, a laser sensor or the like.

4. Method according to any one of the preceding claims, **characterized in that** in a reference routine, from the evaluation images (18) of a number of membrane units (2), the reference image (21) is being defined, preferably, that the reference image (21) is being defined based on averaging the evaluation images (18) of the number of membrane units (2).

5. Method according to any one of the preceding claims, **characterized in that** the evaluation data (19) represent a quality grade regarding a degree of deviation between the respective evaluation image (18) and the reference image (21), preferably, that the quality grade is defined based on applying a mathematical operation onto the respective evaluation image (18) and the reference image (21), preferably, that the principle of "sum of squared errors" is applied onto the evaluation image (18) and the reference image (21).

6. Method according to any one of the preceding claims, **characterized in that** the evaluation data (19) represent a deviation in the form of a shift and/or a rotation of the fluidic structure (11) in the respective evaluation image (18) with respect to the fluidic structure (11) in the reference image (21).

7. Method according to claim 6, **characterized in that** the evaluation data (19) are generated based on aligning the fluidic structure (11) in the respective evaluation image (18) with the fluidic structure (11) in the reference image (21) and thereby determining the shift and/or rotation of the fluidic structure (11) in the respective evaluation image (18) with respect to the fluidic structure (11) in the reference image (21), preferably, that determining the shift and/or rotation of the fluidic structure (11) is performed in an iterative process, preferably based on the greedy principle.

8. Method according to any one of the preceding claims, **characterized in that** the evaluation data (19) represent a deviation in the form of a skewness of the fluidic structure (11) in the respective evaluation image (18) with respect to the fluidic structure (11) in the reference image (21).

9. Method according to any one of the preceding claims, **characterized in that** the evaluation data (19) represent a deviation in the form of an incompleteness and/or the existence of structural defects of the fluidic structure (11) in the respective evaluation image (18) with respect to the fluidic structure (11) in the reference image (21).

10. Method according to any one of the preceding claims, **characterized in that** the deviation is marked in the respective evaluation image (18) and/or in the reference image (21) and/or in a separate image, preferably, that the marked image is being displayed via a user interface.

11. Method according to any one of the preceding claims, **characterized in that** in the evaluation routine, raw images (29) of the membrane units (2) are generated by means of the sensor arrangement (16), which represent the evaluation images (18).

12. Method according to claim 11, **characterized in that** in the evaluation routine, raw images (29) of the membrane units (2) are generated by means of the sensor arrangement (16), from which the evaluation images (18) are extracted, preferably, that the respective evaluation image (18) is being extracted from the respective raw image (29) by defining a frame (30) within the raw image (29), that is the image border (22) of the evaluation image (18), further preferably, that the image border (22) is a rectangle, which upper and lower boundaries are defined with respect to a first predefined image structure (31) in the raw image (29) and which left and right boundaries are defined with respect to a second predefined image structure (32) in the raw image (29).

13. Method according to any one of the preceding claims, **characterized in that** the evaluation data (29) are being used by the primary production arrangement (9) to adapt the primary processing routine, preferably, that the primary production arrangement (9) is parameterized based on the evaluation data (19), in order to minimize the detected deviation between the respective evaluation image (18) and the reference image (21).

14. Method for producing a membrane product such as a lateral flow test from a roll or sheet (1) of membrane units (2) by means of a secondary production arrangement (36), which membrane units (2) have been produced according to any one of the preceding claims, **characterized in that** the roll or sheet (1) of membrane units (2) is processed in at least one secondary processing routine based on the evaluation data (19).

15. Method according to claim 14, **characterized in that** the secondary production arrangement (36) adapts the secondary process routine to the evaluation data (19), in order to support the production of identical membrane products (3).

16. Method according to claim 14 or 15, **characterized in that** depending on the detected quality grade, representing a maximum allowed degree of deviation, the respective membrane unit (2) may be discarded from further processing.

17. Method according to any one of the claims 14 to 16, **characterized in that** the secondary processing routine includes the secondary process step of cutting the membrane material (7) into single cut-out membrane units (2), each comprising a fluidic structure (11), preferably, that the cutting step is adapted to the detected deviation such that the membrane units (2) are identical in view of the fluidic structure (11) of the respective membrane unit (2).

18. Method according to any one of the claims 14 to 17, **characterized in that** the secondary processing routine includes the secondary process step of charging the membrane material (7) at a predefined location on the membrane unit (2) with bio-active material such as antibodies, preferably, that charging of the membrane material (7) is adapted to the detected deviation, such that the placement of the bio-active material with respect to the fluidic structure (11) is identical for each membrane unit (2).

19. Method according to claim 14 or 18, **characterized in that** the secondary processing routine includes the secondary process step of inserting the cut-out membrane units (2) into a housing (4), preferably, that inserting the cut-out membrane units (2) is adapted to the detected deviation such that the fluidic structure (11) is aligned to a structure, preferably a window (5) or the like, of the housing (4).

20. Method for evaluating a membrane unit (2) for a membrane product (3) such as a lateral flow test, wherein the membrane unit (2) comprises a fluidic structure (11) for defining fluid flow through the membrane material (7), in particular a hydrophobic structure, that has been introduced into the membrane material (7), wherein an evaluation routine is performed by means of an evaluation arrangement (15) with a sensor arrangement (16) and an evaluation control (17),
**characterized in**
**that** in the evaluation routine, evaluation images (18) of the fluidic structures (11) of the membrane units (2) are generated by means of the sensor arrangement (16) and evaluation data (19) are generated by means of the evaluation control (17) and that the evaluation data (19) represent the deviation in predefined geometrical properties of the fluidic structure (11) in the evaluation image (18) with respect to the fluidic structure (11) in a reference image (21).

21. Primary production arrangement to perform the method according to any one of the claims claim 1 to 13 for producing a roll or sheet (1) of membrane units (2) from a roll or sheet of membrane material (7).

22. Secondary production arrangement to perform the method according to any one of the claims claim 14 to 19 for producing a membrane product (3) such as a lateral flow test from a roll or sheet (1) of membrane units (2).
